(19) Europäisches Patentamt
European Patent Office
Office européen des brevets

(11) **EP 2 757 084 A1**

(12) **EUROPEAN PATENT APPLICATION**
published in accordance with Art. 153(4) EPC

(43) Date of publication:
**23.07.2014 Bulletin 2014/30**

(51) Int Cl.:
*C04B 37/00* (2006.01)          *B01D 53/94* (2006.01)
*B01J 35/04* (2006.01)          *C04B 38/00* (2006.01)

(21) Application number: **11872428.5**

(22) Date of filing: **16.09.2011**

(86) International application number:
**PCT/JP2011/071272**

(87) International publication number:
**WO 2013/038564 (21.03.2013 Gazette 2013/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Ibiden Co., Ltd**
**Ogaki-shi, Gifu 503-8604 (JP)**

(72) Inventors:
• **ABE, Toshiyasu**
 **Gifu 501-0695 (JP)**

• **UMEMOTO, Takehiro**
 **Gifu 501-0695 (JP)**

(74) Representative: **Walcher, Armin**
 **Louis, Pöhlau, Lohrentz**
 **Patentanwälte**
 **Postfach 30 55**
 **90014 Nürnberg (DE)**

(54) **METHOD FOR PRODUCING HONEYCOMB STRUCTURE AND METHOD FOR PRODUCING EXHAUST GAS PURIFICATION DEVICE**

(57)    A method for manufacturing a honeycomb structure including a honeycomb unit which contains silicoaluminophosphate particles and has a plurality of cells that extend in a longitudinal direction from a first end surface to a second end surface and are partitioned by a cell wall. The method includes a step of preparing a plurality of honeycomb compacts, a step of forming a honeycomb unit including at least one joining surface on which paste for adhesion layers is to be applied in a subsequent step by firing the respective honeycomb compacts, a step of impregnating all of the respective honeycomb units in water in which an amount of water in which the honeycomb units are impregnated is in a range of 15 wt% to 25 wt% with respect to a weight of the honeycomb units in a dried state, a step of preparing paste for adhesion layers containing at least inorganic particles, a binder and water, a step of applying the paste for adhesion layers to the joining surfaces of the honeycomb units and mutually joining the respective honeycomb units, and a step of drying, defatting and solidifying the paste for adhesion layers, thereby obtaining an adhesion layer.

FIG. 3

```
              START
                │
  (a) A PLURALITY OF HONEYCOMB COMPACTS ARE PREPARED ──S110
                │
  (b) HONEYCOMB UNIT INCLUDING AT LEAST ONE JOINING
      SURFACE ON WHICH PASTE FOR ADHESION LAYERS IS
  TO BE APPLIED IN SUBSEQUENT STEP IS FORMED BY FIRING ──S120
           RESPECTIVE HONEYCOMB COMPACTS
                │
  (c) ALL OF RESPECTIVE HONEYCOMB UNITS ARE
           IMPREGNATED IN WATER

   AMOUNT OF WATER IN WHICH HONEYCOMB UNITS ARE ──S130
   IMPREGNATED IS IN RANGE OF 15 wt% TO 25 wt% WITH
         RESPECT TO WEIGHT OF HONEYCOMB
              UNITS IN DRIED STATE
                │
  (d) PASTE FOR ADHESION LAYERS CONTAINING AT LEAST ──S140
      INORGANIC PARTICLES, BINDER AND WATER IS PREPARED
                │
  (e) PASTE FOR ADHESION LAYERS IS APPLIED TO JOINING
      SURFACES OF HONEYCOMB UNITS, AND RESPECTIVE ──S150
         HONEYCOMB UNITS ARE MUTUALLY JOINED
                │
  (f) PASTE FOR ADHESION LAYERS IS DRIED, DEFATTED AND ──S160
      SOLIDIFIED, THEREBY OBTAINING ADHESION LAYER
                │
               END
```

## Description

Technical Field

The present invention relates to a method for manufacturing a honeycomb structure and a method for manufacturing an exhaust gas purifying apparatus.

Background Art

While there have been a number of techniques developed to purify exhaust gas from automobiles, it is still difficult to say that a satisfactory exhaust gas countermeasure has been developed in consideration of an increase in traffic volume. In Japan and also occurring throughout the world, there is a tendency of automotive exhaust gas regulations becoming stricter.

In order to cope with the regulations, in exhaust gas purifying systems, a catalyst carrier that can treat a predetermined component in exhaust gas is in use. In addition, a honeycomb structure is known as a member for the catalyst carrier.

The honeycomb structure includes, for example, a plurality of cells (through holes) extending in the longitudinal direction from one end surface to the other end surface of the honeycomb structure, and the cells are mutually partitioned by a cell wall carrying a catalyst. Therefore, in a case in which exhaust gas is circulated in the honeycomb structure, substances in the exhaust gas, such as HC, CO and/or NOx, are modified using a catalyst supported in the cell wall, and the components in the exhaust gas can be treated.

Particularly, in systems called selective catalytic reduction (SCR) systems, it is possible to decompose NOx in exhaust gas into nitrogen and water using ammonia.

Zeolite is known as a material that adsorbs ammonia in the SCR systems. For example, PTL 1 describes a honeycomb structure including a honeycomb unit that contains zeolite as inorganic particles.

In recent years, the use of phosphate-based zeolite such as SAPO as inorganic particles has been proposed in order to obtain better NOx purification performance (PTL 2).

Citation List

Patent Literature

[PTL 1] PCT International Publication No. WO 09/141897
[PTL 2] PCT International Publication No. WO 06/137149

Summary of Invention

Technical Problem

A honeycomb structure is manufactured by, for example, joining a plurality of honeycomb units containing inorganic particles using paste for adhesion layers and forming an assembly.

The paste for adhesion layers used in the joining treatment of the honeycomb structure contains, for example, water, inorganic particles (for example, silica particles), a binder and the like, and, when the paste for adhesion layers is dried, defatted and solidified, an adhesion layer is formed, and the respective honeycomb units are strongly joined.

Here, silicoaluminophosphate (SAPO) particles have a characteristic of contracting their volume when absorbing moisture and expanding their volume when emitting moisture. Therefore, in a case in which the joining treatment of the honeycomb structure is carried out using honeycomb units containing SAPO particles, there is a higher probability of a problem of the occurrence of the damage of the honeycomb units.

The invention has been made in consideration of the above problem, and an object of the invention is to provide a method for manufacturing a honeycomb structure that is not easily damaged during or after the joining treatment of the honeycomb units compared with a honeycomb structure of the related art. In addition, another object of the invention is to provide a method for manufacturing an exhaust gas purifying apparatus including the method for manufacturing a honeycomb structure.

Solution to Problem

The invention provides a method for manufacturing a honeycomb structure including a honeycomb unit which contains silicoaluminophosphate particles and has a plurality of cells that extend in a longitudinal direction from a first end surface to a second end surface and are partitioned by a cell wall, including:

(a) a step of preparing a plurality of honeycomb compacts,
(b) a step of forming a honeycomb unit including at least one joining surface on which paste for adhesion layers is to be applied in a subsequent step by firing the respective honeycomb compacts,
(c) a step of impregnating all of the respective honeycomb units in water,
(d) a step of preparing paste for adhesion layers containing at least inorganic particles, a binder and water,
(e) a step of applying the paste for adhesion layers to the joining surfaces of the honeycomb units and mutually joining the respective honeycomb units, and
(f) a step of drying, defatting and solidifying the paste for adhesion layers, thereby obtaining an adhesion layer,

in which, in the step (c) of impregnating all of the respective honeycomb units in water, an amount of water in which the honeycomb units are impregnated is in a range of 15 wt% to 25 wt% with respect to a weight of the honeycomb units in a dried state.
Here, in the method for manufacturing a honeycomb structure according to the invention, the silicoaluminophosphate particles may have a molar ratio Si/(Al+P) in a range of 0.11 to 0.33.
In addition, in the method for manufacturing a honeycomb structure according to the invention, the silicoaluminophosphate particles may be contained in the honeycomb units in a dried state in a range of 230 g/L to 360 g/L with respect to all the honeycomb units.
In addition, in the method for manufacturing a honeycomb structure according to the invention, the step (c) of impregnating all of the respective honeycomb units in water may include a step of impregnating each of the honeycomb units in water.
In addition, in the method for manufacturing a honeycomb structure according to the invention, the honeycomb unit may further contain an inorganic binder.
In addition, in the method for manufacturing a honeycomb structure according to the invention, the honeycomb unit may further contain an inorganic fiber.
In this case, the inorganic fiber may be one or more selected from a group consisting of alumina, silica, silicon carbide, silica alumina, glass, potassium titanate and aluminum borate.
Furthermore, the invention provides a method for manufacturing an exhaust gas purifying apparatus, including:

a step of manufacturing a honeycomb structure using the method for manufacturing a honeycomb unit, and
a step of accommodating the honeycomb structure in a metal container in a state in which a holding seal material is disposed around the honeycomb structure. Advantageous Effects of Invention

In the invention, it becomes possible to provide a method for manufacturing a honeycomb structure that is not easily damaged during or after the joining treatment of the honeycomb units compared with a honeycomb structure of the related art. In addition, it becomes possible to provide a method for manufacturing an exhaust gas purifying apparatus including the method for manufacturing a honeycomb structure.

Brief Description of Drawings

Fig. 1 is a perspective view schematically illustrating an example of a honeycomb structure of the invention.
Fig. 2 is a perspective view schematically illustrating an example of a honeycomb unit that configures the honeycomb structure of Fig. 1.
Fig. 3 is a flow chart illustrating an example of a method for manufacturing a honeycomb structure according to the invention.

Description of Embodiments

Hereinafter, the method for manufacturing a honeycomb structure of the invention will be described using the accompanying drawings.

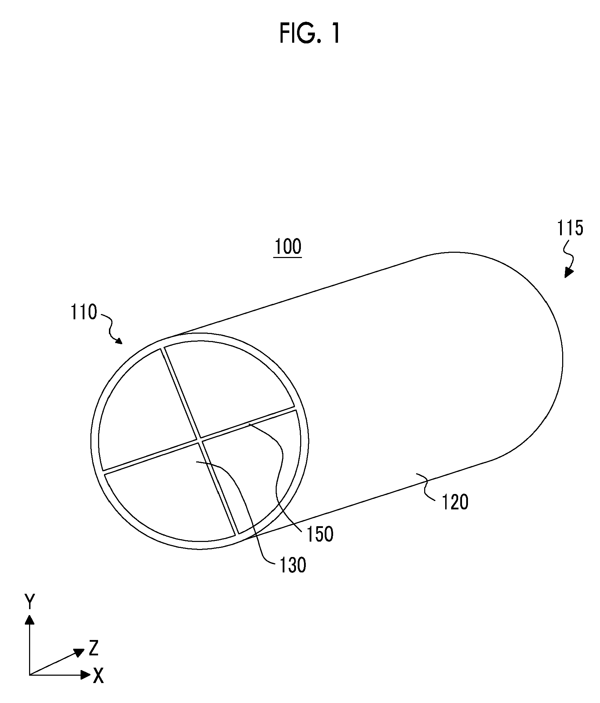

Fig. 1 schematically illustrates an example of the structure of a honeycomb structure according to the invention.

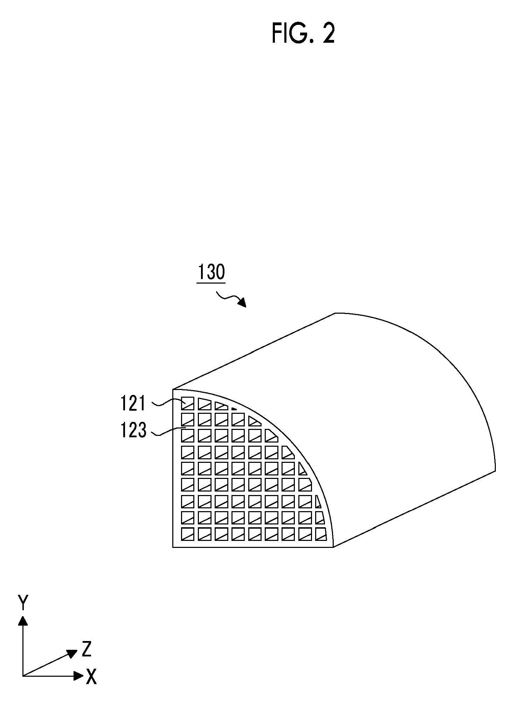

In addition, Fig. 2 schematically illustrates an example of a honeycomb unit which is a basic unit of the honeycomb structure illustrated in Fig. 1.

As illustrated in Fig. 1, a honeycomb structure 100 includes two end surfaces 110 and 115. In addition, in an ordinary case, an outer circumference coating layer 120 is installed on an outer circumferential surface of the honeycomb structure 100 excluding both end surfaces.

A circular column-shaped honeycomb structure 100 is configured by, for example, joining a plurality of ceramic honeycomb units 130 with a predetermined column shape (4 honeycomb units with a fan-like cross-sectional shape in the example of Fig. 1) as illustrated in Fig. 2 through an adhesion layer 150.

As illustrated in Fig. 2, the honeycomb unit 130 extends in the longitudinal direction of the honeycomb unit from one end to the other end, and includes a plurality of cells (through holes) 121 opened on both end surfaces and a cell wall 123 that partitions the cells. In the example of Fig. 2, the cross-section of the cell 121 vertical to the longitudinal direction (Z direction) forms a substantially square shape while the cross-section is not limited thereto.

Here, in general, in a case in which honeycomb units containing SAPO particles (phosphate-based zeolite particles) as inorganic particles are used, a honeycomb structure including the above honeycomb units can be used as a catalyst carrier for purifying CO, HC and/or NOx.

Particularly, in the honeycomb structure manufactured using the method for manufacturing a honeycomb structure of the invention, the honeycomb unit 130 contains silicoaluminophosphate (SAPO) particles as inorganic particles, and the honeycomb structure 100 made up of the above honeycomb units 130 can be used in urea SCR systems including a urea tank.

For example, in the urea SCR system, when exhaust gas is circulated in the system, urea accommodated in the urea tank reacts with water in the exhaust gas, thereby generating ammonia (Formula (1)).

$$CO(NH_2)_2 + H_2O \rightarrow 2NH_3 + CO_2 \qquad \text{Formula (1)}$$

In a case in which the ammonia is infiltrated into the respective cells 121 in the honeycomb units 130 from one end surface (for example, the end surface 110) of the honeycomb structure 100 together with the exhaust gas containing NOx, the reactions of the following formulae (2-1) and (2-2) are caused by the catalytic action of SAPO contained in the cell wall 123.

$$4NH_3 + 4NO + O_2 \rightarrow 4N_2 + 6H_2O \qquad \text{Formula (2-1)}$$

$$8NH_3 + 6NO_2 \rightarrow 7N_2 + 12H_2O \qquad \text{Formula (2-2)}$$

After that, the purified exhaust gas is discharged from the other end surface (for example, the end surface 115) of the honeycomb structure 100. As such, when exhaust gas is circulated in the honeycomb structure 100, NOx in the exhaust gas can be treated.

Meanwhile, as described above, the honeycomb structure 100 may be configured by joining a plurality of the honeycomb units 130 through the adhesion layer 150 and then cutting the outer circumference into a predetermined shape. The adhesion layer 150 is formed by applying paste for the adhesion layer containing water, inorganic particles (for example, silica particles), a binder and the like to side surfaces of the honeycomb units 130, drying, defatting and solidifying the paste for the adhesion layer.

However, SAPO particles have a characteristic of contracting the volume when absorbing moisture and expanding the volume when emitting moisture. Therefore, in a case in which the SAPO particles are used as the inorganic particles that configure the honeycomb unit 130, it is considered that there is a higher probability of the occurrence of the following problem.

In a joining treatment of the honeycomb structure, when the paste for the adhesion layer is applied to the side surfaces of the honeycomb units 130, some moisture in the paste for the adhesion layer moves toward the honeycomb units 130. Then, the phosphate-based zeolite particles, that is, the honeycomb units 130 locally contract on a contact surface with the paste for the adhesion layer. After that, when the moisture that has moved toward the honeycomb units 130 is evaporated, accordingly, the SAPO particles locally expand. It is considered that, due to the local contraction and expansion cycle of the honeycomb units 130, the honeycomb units 130 are damaged during or after the joining treatment of the honeycomb units.

In contrast to what has been described above, the invention provides a method for manufacturing a honeycomb structure for obtaining a honeycomb structure that alleviates or solves the above problem. That is, in the method for manufacturing a honeycomb structure according to the invention, it is possible to obtain the honeycomb structure 100 that significantly suppresses the occurrence of damage in the honeycomb units during or after the joining treatment of the honeycomb units in the honeycomb units 130 containing the SAPO particles as described below in detail.

(Configuration of the honeycomb structure 100)

Here, the components of the honeycomb structure 100 illustrated in Fig. 1 will be simply described.

(Honeycomb unit 130)

The honeycomb unit 130 contains the SAPO particles. Furthermore, the honeycomb unit 130 may contain an inorganic binder and an inorganic fiber as well. The honeycomb unit 130 may further contain inorganic particles other than the SAPO particles.

The SAPO particles have a molar ratio Si/(Al+P) in a range of desirably 0.11 to 0.33 and more desirably 0.16 to 0.28.

The SAPO particles may be ion-exchanged with Fe, Cu, Ni, Co, Zn, Mn, Ti, Ag or V. Among the above elements, Fe or Cu is preferable.

The total amount of the inorganic particles containing the SAPO particles may be in a range of 230 g/L to 360 g/L with respect to all the honeycomb units in the honeycomb units.

In addition, the SAPO particles are desirably contained in a range of 270 g/L to 360 g/L with respect to all the honeycomb units in the honeycomb units in a dried state.

The inorganic binder contained in the honeycomb unit is desirably at least one selected from a group consisting of an alumina sol, a silica sol, a titania sol, water glass, sepiolite, attapulgite and boehmite.

In addition, in a case in which an inorganic fiber is added to the honeycomb unit, the inorganic fiber is desirably alumina, silica, silicon carbide, silica alumina, glass, potassium titanate, aluminum borate or the like. The inorganic fiber may be solely used, or two or more inorganic fibers may be jointly used. Among the above inorganic fibers, alumina is desirable.

The cell density of the honeycomb unit 130 is preferably in a range of 15.5 cells/cm$^2$ to 186 cells/cm$^2$ (100 cpsi to 1200 cpsi), more preferably in a range of 46.5 cells/cm$^2$ to 170 cells/cm$^2$ (300 cpsi to 1100 cpsi), and still more preferably in a range of 62.0 cells/cm$^2$ to 155 cells/cm$^2$ (400 cpsi to 1000 cpsi).

The thickness of the cell wall 123 in the honeycomb unit 130 is not particularly limited, but a desirable lower limit is 0.1 mm in terms of the strength of the honeycomb unit, and a desirable upper limit is 0.4 mm in terms of the purification performance of the honeycomb structure.

(Adhesion layer 150)

The adhesion layer 150 in the honeycomb structure 100 is formed using the paste for the adhesion layer as a raw material as described above.

The thickness of the adhesion layer is preferably in a range of 0.3 mm to 2.0 mm. When the thickness of the adhesion layer is less than 0.3 mm, the honeycomb unit cannot obtain a sufficient joining strength. In addition, when the thickness of the adhesion layer exceeds 2.0 mm, the pressure loss of the honeycomb structure increases. Meanwhile, the number of the honeycomb units being joined is appropriately selected depending on the size of the honeycomb structure.

A balloon that is a minute hollow sphere containing an oxide-based ceramic and a pore-forming agent such as spherical acrylic particles or graphite may be added to the paste for the adhesion layer which serves as a raw material as necessary.

(Coating layer 120)

The outer circumference coating layer 120 of the honeycomb structure 100 contains at least one of the inorganic particles, the inorganic binder and the inorganic fiber which are the same as the materials that configure the above honeycomb units, and, furthermore, is formed using paste containing an organic binder as a raw material. Alternatively, a material that is the same as or different from the adhesion layer 150 may be used for the outer circumference coating layer 120. A balloon that is a minute hollow sphere containing an oxide-based ceramic and a pore-forming agent such as spherical acrylic particles or graphite may be added to the paste for the outer circumference coating layer which serves as a raw material as necessary. The final thickness of the coating layer is preferably in a range of 0.1 mm to 2.0 mm.

(Method for manufacturing a honeycomb structure according to the invention)

Hereinafter, the method for manufacturing a honeycomb structure according to the invention will be described in detail.

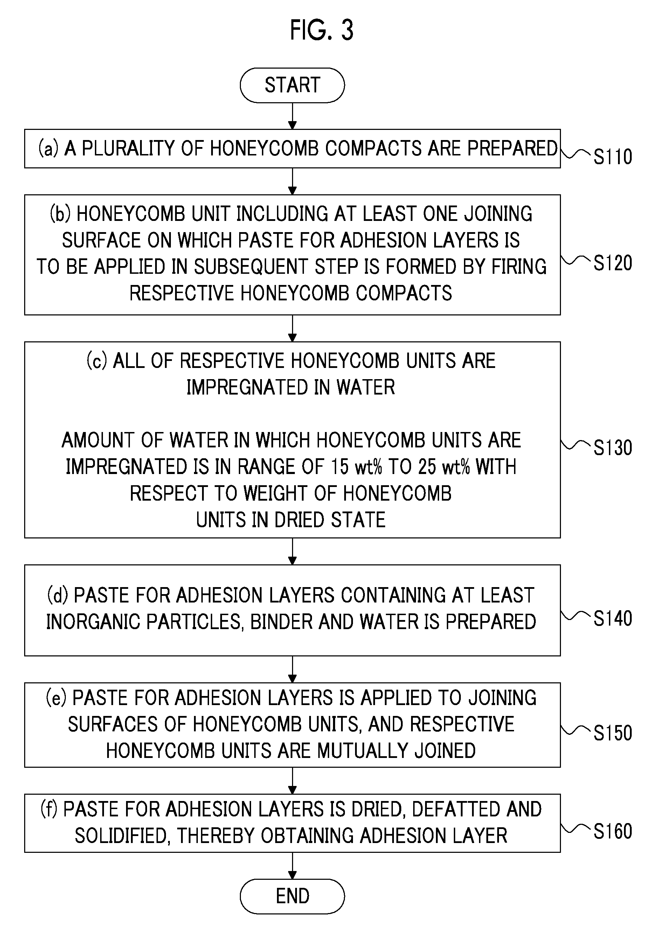

Fig. 3 illustrates a flow chart of an example of the method for manufacturing a honeycomb structure according to the invention. As illustrated in Fig. 3, the method for manufacturing a honeycomb structure includes:

(a) a step of preparing a plurality of honeycomb compacts (Step S110),
(b) a step of forming a honeycomb unit including at least one joining surface on which paste for adhesion layers is to be applied in a subsequent step by firing the respective honeycomb compacts (Step S120),
(c) a step of impregnating all of the respective honeycomb units in water (Step S130),
(d) a step of preparing paste for adhesion layers containing at least inorganic particles, a binder and water (Step S140),
(e) a step of applying the paste for adhesion layers to the joining surfaces of the honeycomb units and mutually joining the respective honeycomb units (Step S150), and
(f) a step of drying, defatting and solidifying the paste for adhesion layers, thereby obtaining an adhesion layer (Step S160),

in which, in the step (c) of impregnating all of the respective honeycomb units in water, an amount of water in which the honeycomb units are impregnated is in a range of 15 wt% to 25 wt% with respect to a weight of the honeycomb units in a dried state.

Hereinafter, the respective steps will be described.

(Step S110)

First, a honeycomb unit compact is produced by carrying out extrusion and the like using raw material paste which contains inorganic particles as a main component and, furthermore, an inorganic binder and an inorganic fiber added as necessary.

As described above, the inorganic particles contain the SAPO particles. The inorganic particles may further contain alumina, silica, titania, ceria, zirconia, mullite and/or the like.

In addition to the above components, an organic binder, a dispersion medium and a molding assistant may be appropriately added to the raw material paste depending on the moldability. The organic binder is not particularly limited, and examples thereof include one or more organic binders selected from methyl cellulose, carboxymethyl cellulose, hydroxyethyl cellulose, polyethylene glycol, phenol resins, epoxy resins and the like. The blending amount of the organic binder is preferably in a range of 1 part by weight to 10 parts by weight with respect to a total of 100 parts by weight of the inorganic particles and the inorganic binder.

The dispersion medium is not particularly limited, and examples thereof include water, organic solvents (benzene and the like), alcohols (methanol and the like) and the like. The molding assistant is not particularly limited, and examples thereof include ethylene glycol, dextrin, fatty acids, fatty acid soaps, polyalcohols and the like.

The raw material paste is not particularly limited, and is preferably mixed and kneaded. For example, the raw material paste may be mixed using a mixer, an attritor or the like, and may be sufficiently kneaded using a kneader or the like. A method for molding the raw material paste is not particularly limited, and, for example, the raw material paste is preferably molded into a shape having cells using extrusion and the like.

Next, the obtained honeycomb unit compact is preferably dried. A dryer used for drying is not particularly limited, and examples thereof include a microwave dryer, a hot air dryer, a dielectric dryer, a reduced-pressure dryer, a vacuum dryer, a freeze dryer and the like. In addition, the obtained dried honeycomb unit compact is preferably defatted. The defatting conditions are not particularly limited, can be appropriately selected depending on the kinds and amounts of organic substances contained in the honeycomb unit compact, and the honeycomb unit compact is preferably defatted at 400°C for 2 hours.

In the example of Figs. 1 and 2, a honeycomb compact having a fan-shaped (with a center angle of 90°) cross-section is produced.

(Step S120)

Next, the compact prepared in Step S110 is fired, thereby manufacturing a honeycomb unit. The honeycomb unit includes at least one joining surface on which the paste for the adhesion layer is to be applied in a subsequent step S150.

The firing conditions are not particularly limited, but the firing temperature is preferably in a range of 600°C to 1200°C, and more preferably in a range of 600°C to 1000°C. This is because, when the firing temperature is lower than 600°C, sintering does not proceed, and the strength of the honeycomb unit decreases, and, when the firing temperature exceeds 1200°C, sintering excessively proceeds, and the purification rate of exhaust gas decreases.

(Step S130)

Next, the produced respective honeycomb units are impregnated in water.

This step is carried out in order to suppress the uneven introduction of water into the honeycomb units. That is, the treatment avoids the adsorption of moisture in the paste for the adhesion layer only to the contact portions of the honeycomb units with the paste for the adhesion layer when the paste for the adhesion layer is applied to the joining surfaces of the honeycomb units in the subsequent step S150. In addition, the problem of the local volume contraction of the honeycomb unit due to the local adsorption of moisture and the local volume expansion of the honeycomb unit due to the subsequent drying of moisture is suppressed.

The amount of water being introduced into the honeycomb units is in a range of 15 wt% to 25 wt% with respect to the honeycomb units in a dried state.

In a case in which the amount of water being introduced into the honeycomb units is less than 15 wt%, the SAPO particles still maintain a sufficient moisture adsorption function. Therefore, in a subsequent adsorption step, the SAPO particles in the honeycomb units adsorb moisture in the paste for the adhesion material, and there is a higher probability of cracking due to a change in the volume. On the other hand, the maximum amount of water that can be introduced into the honeycomb units is 25 wt%, and, even when an attempt is made to introduce more water, water leaks from the honeycomb units, and it is difficult to introduce more than 25 wt% of water into the honeycomb units.

Water is introduced throughout all the honeycomb units.

A method for introducing water into the honeycomb units is not particularly limited. However, in an ordinary case, the simplest method, that is, a method of impregnating the honeycomb units in water is employed.

In addition, a method for adjusting the amount of introduced moisture is not particularly limited. For example, the amount of introduced moisture may be adjusted to a desired value using the impregnation time of the honeycomb units in water and/or the conditions of an air flow treatment of the impregnated honeycomb units (for example, the pressure and/or time of air flow and the like).

(Step S140)

Next, the paste for the adhesion layer is prepared.

The paste for the adhesion layer contains at least inorganic particles, a binder (an organic binder and/or an inorganic binder) and water. The paste for the adhesion layer may further contain an inorganic fiber.

Examples of the inorganic particles that can be used include alumina particles, silica particle, titania particles, zirconia particles, mullite, zeolite and/or the like.

The organic binder is not particularly limited, and examples thereof include one or more selected from polyvinyl alcohols, methyl cellulose, ethyl cellulose, carboxymethyl cellulose and the like. Among the organic binders, carboxymethyl cellulose is desirable.

The inorganic binder is not particularly limited, and examples thereof include an alumina sol, a silica sol, a titania sol, water glass, white clay, kaolin, montmorillonite, sepiolite, attapulgite, boehmite and the like. The inorganic binder may be solely used, or two or more inorganic binders may be jointly used.

Among the above, at least one selected from a group consisting of an alumina sol, a silica sol, a titania sol, water glass, sepiolite, attapulgite and boehmite is desirable.

In addition, a material of the inorganic fiber is not particularly limited, and, for example, alumina, silica, silicon carbide, silica alumina, glass, potassium titanate, aluminum borate or the like is used.

(Step S150)

Next, the respective honeycomb units are mutually joined through the paste for the adhesion layer prepared in Step S140, thereby configuring a honeycomb unit assembly (joining step).

Here, as is evident from the above step S130, the honeycomb units already contain a sufficient amount of moisture. Therefore, in the present step, even when the paste for the adhesion layer is applied to the side surfaces of the honeycomb units, it is not easy for moisture to be locally adsorbed to the SAPO particles in the honeycomb units in the interfaces between the paste for the adhesion layer and the honeycomb unit.

Therefore, in the method for manufacturing a honeycomb structure of the invention, the occurrence of local contraction in the moisture-adsorbed portions of the honeycomb units caused by the local movement of moisture toward the honeycomb units from the paste for the adhesion layer in the joining step of the honeycomb units, which occurred in the related art, is significantly suppressed. In addition, a sufficient amount of moisture contained in the honeycomb units significantly suppresses the occurrence of local contraction and expansion cycles in the honeycomb units, and it becomes possible to obtain a honeycomb unit and, furthermore, a honeycomb structure which is not easily damaged during or after the joining treatment of the honeycomb units.

In Figs. 1 and 2, four honeycomb units are joined using the paste for the adhesion layer, thereby forming a circular column-shaped honeycomb assembly.

(Step S160)

Next, the paste for the adhesion layer is dried, defatted and solidified. In addition, at this time, water impregnated in the honeycomb units is also removed in the above step (Step S130).

The temperature of drying, defatting and solidification is not particularly limited, but is desirably, for example, in a range of 500°C to 900°C.

Then, the paste for the adhesion layer is dried and solidified, thereby changing the adhesion layer.

Meanwhile, it is possible to assemble honeycomb units having a predetermined shape so as to obtain a predetermined shape (for example, a circular column), but it is also possible to assemble a plurality of honeycomb units having the same shape (for example, a rectangular column) and to cut the outer circumferential surface of the obtained honeycomb unit assembly into, for example, a circular column shape using a diamond cutter or the like. Then, a honeycomb structure having a desired shape can be produced.

Meanwhile, in a necessary case, an outer circumference coating layer may be installed on the outer circumferential surface of the honeycomb structure.

Examples

Hereinafter, examples of the invention will be described.

(Example 1)

(Example 1)

First, the SAPO particles (average particle diameter of 3 $\mu$m, 2800 parts by weight), boehmite (inorganic binder, 1120 parts by weight), an alumina fiber (average fiber length of 100 $\mu$m, average fiber diameter of 6 $\mu$m, 270 parts by weight), methyl cellulose (380 parts by mass), oleic acid (molding assistant, 310 parts by weight) and water (2400 parts by weight) were added, mixed and kneaded, thereby producing a mixed composition.

The SAPO particles that had been already ion-exchanged with Cu (ion exchange amount of 2.7 wt%) were used. The ratio Si/(Al+P) (molar ratio) of the SAPO particles was 0.16.

Next, the mixed composition was extruded using an extruder, thereby obtaining a honeycomb unit compact.

Next, the honeycomb unit compact was sufficiently dried using a reduced-pressure microwave dryer and held at 400°C for 2 hours so as to be defatted. After that, the honeycomb unit compact was held at 700°C for 2 hours so as to be fired, thereby producing a column-shaped honeycomb unit (radius of 132 mm) having a quarter circular fan-like cross-sectional shape.

In the honeycomb unit, the thickness of the cell wall was 0.2 mm, and the cell density was 800 cpsi. The water content of the honeycomb unit was obtained as follows. The amount of the SAPO particles contained in 1 liter of the volume of the honeycomb unit was 330 g. The weight (initial weight) of the obtained honeycomb unit was measured.

Next, the obtained honeycomb unit was put into a water tank with the longitudinal axis in parallel with the vertical direction, and impregnated in water for 5 minutes. Next, the unit was flipped over, and the honeycomb unit was impregnated in water for 5 minutes.

After that, the honeycomb unit was removed from the water tank, and, when the dripping of water stopped, moisture in the honeycomb unit was suctioned and drained using a blower (wind speed of 3 m/s). This treatment was carried out for 20 minutes beginning from one end surface of the honeycomb unit. After that, the same treatment was carried out for 1 minute from the other end surface of the honeycomb unit.

After that, the honeycomb unit was dried. The drying treatment was carried out by putting the honeycomb unit on a table and blowing air for 60 minutes using a fan.

After the drying treatment, the weight (water-containing weight) of the honeycomb unit was measured. In addition, the water content of the honeycomb unit was measured using the following formula:

$$\text{Water content (\%) of the honeycomb unit} = \{(\text{the water-containing weight (g) of the honeycomb unit} - \text{the initial weight of the honeycomb unit (g)}) / \text{the initial weight of the honeycomb unit (g)}\} \times 100$$

The water content of the honeycomb unit was 15%.

Next, the side surfaces of four honeycomb units configured as described above were joined through the paste for the adhesion layer, thereby producing an approximately circular column-shaped honeycomb structure having a total length of 150 mm and a diameter of 267 mm. The paste for the adhesion layer used had the following composition:

| | |
|---|---|
| Ceramic fiber | 16.2 wt% |
| Silica glass | 51.9 wt% |
| Carboxymethyl cellulose | 0.1 wt% |
| Silica sol | 28.9 wt% |
| Polyvinyl alcohol | 0.8 wt% |
| Non-ionic surfactant | 1.9 wt% |
| Organic balloon | 0.2 wt% |

The paste for the adhesion layer was dried, thereby forming an adhesion layer. The thickness of the adhesion layer was set to 1.0 mm.

As a result, a honeycomb structure according to Example 1 was obtained.

The appearance of the produced honeycomb structure (honeycomb unit portion, which shall apply below) according to Example 1 was visually observed. As a result, no fracture and cracking was observed in the honeycomb structure.

(Example 2)

A honeycomb structure of Example 2 was produced using the same method as in Example 1. However, in Example 2, the drying treatment was carried out by putting the honeycomb unit on a table and blowing air for 30 minutes using a fan. Other production conditions are the same as in Example 1.

The water content of the honeycomb unit was 20%.

The appearance of the produced honeycomb structure according to Example 2 was visually observed. As a result, no fracture and cracking was observed in the honeycomb structure.

(Example 3)

A honeycomb structure of Example 3 was produced using the same method as in Example 1. However, in Example 3, the drying treatment was carried out by putting the honeycomb unit on a table and blowing air for 10 minutes using a fan. Other production conditions are the same as in Example 1.

The water content of the honeycomb unit was 25%.

The appearance of the produced honeycomb structure according to Example 3 was visually observed. As a result, no fracture and cracking was observed in the honeycomb structure.

(Example 4)

A honeycomb structure of Example 3 was produced using the same method as in Example 1. However, in Example 4, the ratio Si/(Al+P) (molar ratio) of the SAPO particles was 0.23. Other production conditions are the same as in Example 1.

The water content of the honeycomb unit was 15%.

The appearance of the produced honeycomb structure according to Example 4 was visually observed. As a result, no fracture and cracking was observed in the honeycomb structure.

(Example 5)

A honeycomb structure of Example 5 was produced using the same method as in Example 4. However, in Example 5, the drying treatment was carried out by putting the honeycomb unit on a table and blowing air for 30 minutes using a fan. Other production conditions are the same as in Example 4.
The water content of the honeycomb unit was 20%.
The appearance of the produced honeycomb structure according to Example 5 was visually observed. As a result, no fracture and cracking was observed in the honeycomb structure.

(Example 6)

A honeycomb structure of Example 6 was produced using the same method as in Example 4. However, in Example 6, the drying treatment was carried out by putting the honeycomb unit on a table and blowing air for 10 minutes using a fan. Other production conditions are the same as in Example 4.
The water content of the honeycomb unit was 25%.
The appearance of the produced honeycomb structure according to Example 6 was visually observed. As a result, no fracture and cracking were was not observed in the honeycomb structure.

(Example 7)

A honeycomb structure of Example 7 was produced using the same method as in Example 1. However, in Example 7, the ratio Si/(Al+P) (molar ratio) of the SAPO particles was 0.28. Other production conditions are the same as in Example 1.
The water content of the honeycomb unit was 15%.
The appearance of the produced honeycomb structure according to Example 7 was visually observed. As a result, no fracture and cracking was observed in the honeycomb structure.

(Example 8)

A honeycomb structure of Example 8 was produced using the same method as in Example 7. However, in Example 8, the drying treatment was carried out by putting the honeycomb unit on a table and blowing air for 30 minutes using a fan. Other production conditions are the same as in Example 7.
The water content of the honeycomb unit was 20%.
The appearance of the produced honeycomb structure according to Example 8 was visually observed. As a result, no fracture and cracking was observed in the honeycomb structure.

(Example 9)

A honeycomb structure of Example 9 was produced using the same method as in Example 7. However, in Example 9, the drying treatment was carried out by putting the honeycomb unit on a table and blowing air for 10 minutes using a fan. Other production conditions are the same as in Example 7.
The water content of the honeycomb unit was 25%.
The appearance of the produced honeycomb structure according to Example 9 was visually observed. As a result, no fracture and cracking was observed in the honeycomb structure.

(Comparative Example 1)

A honeycomb structure of Comparative Example 1 was produced using the same method as in Example 1. However, in Comparative Example 1, the drying treatment of the honeycomb unit was carried out by holding the honeycomb unit in a dryer at 60°C for 40 minutes. Other production conditions are the same as in Example 1.
The water content of the honeycomb unit was 10%.
The appearance of the produced honeycomb structure according to Comparative Example 1 was visually observed. As a result, cracking was caused in the honeycomb structure.

(Comparative Example 2)

A honeycomb structure of Comparative Example 2 was produced using the same method as in Comparative Example 1. However, in Comparative Example 2, the ratio Si/(Al+P) (molar ratio) of the SAPO particles was set to 0.23.

Other production conditions are the same as in Comparative Example 1.

The water content of the honeycomb unit was 10%.

The appearance of the produced honeycomb structure according to Comparative Example 2 was visually observed. As a result, cracking was caused in the honeycomb structure.

(Comparative Example 3)

A honeycomb structure of Comparative Example 3 was produced using the same method as in Comparative Example 1. However, in Comparative Example 3, the ratio Si/(Al+P) (molar ratio) of the SAPO particles was set to 0.28. Other production conditions are the same as in Comparative Example 1.

The water content of the honeycomb unit was 10%.

The appearance of the produced honeycomb structure according to Comparative Example 3 was visually observed. As a result, cracking was causedin the honeycomb structure.

Table 1 described the ratios Si/(Al+P) (molar ratio) and moisture contents (%) of the SAPO particles used when producing the respective honeycomb structures of Examples 1 to 9 and Comparative Examples 1 to 3 and the drying conditions of the honeycomb units. In addition, Table 1 also described the results of the appearance observation (the determination results of the occurrence of cracking) of the respective honeycomb structures.

[Table 1]

| Example | Ratio Si/(Al+P) of SAPO particles (molar ratio) | Method for drying honeycomb units | Water content (%) | Occurrence of cracking |
|---|---|---|---|---|
| Example 1 | 0.16 | 60-minute air blowing using fan | 15 | No |
| Example 2 | 0.16 | 30-minute air blowing using fan | 20 | No |
| Example 3 | 0.16 | 10-minute air blowing using fan | 25 | No |
| Example 4 | 0.23 | 60-minute air blowing using fan | 15 | No |
| Example 5 | 0.23 | 30-minute air blowing using fan | 20 | No |
| Example 6 | 0.23 | 10-minute air blowing using fan | 25 | No |
| Example 7 | 0.28 | 60-minute air blowing using fan | 15 | No |
| Example 8 | 0.28 | 30-minute air blowing using fan | 20 | No |
| Example 9 | 0.28 | 10-minute air blowing using fan | 25 | No |
| Comparative Example 1 | 0.16 | 40-minute holding in dryer at 60°C | 10 | Yes |
| Comparative Example 2 | 0.23 | 40-minute holding in dryer at 60°C | 10 | Yes |
| Comparative Example 3 | 0.28 | 40-minute holding in dryer at 60°C | 10 | Yes |

From the results of Table 1, it was confirmed that, when the water content of the honeycomb unit which is not yet subjected to the joining step of the honeycomb unit is set in a range of 15% to 25% (Examples 1 to 9), it is possible to manufacture a honeycomb structure which is not easily fractured and cracked.

In addition, it is considered that, when the water content of the honeycomb unit which is not yet subjected to the joining step of the honeycomb unit is 10% (Comparative Examples 1 to 3), since the water content of the honeycomb unit is small, the honeycomb units absorb moisture in the paste for the adhesion layer, and thus are cracked due to the local contraction and expansion of the SAPO particles in the honeycomb units.

Reference Signs List

100   HONEYCOMB STRUCTURE
110   FIRST END SURFACE
115   SECOND END SURFACE
120   COATING LAYER
121   CELL
123   CELL WALL
130   HONEYCOMB UNIT
150   ADHESION LAYER

**Claims**

1. A method for manufacturing a honeycomb structure including a honeycomb unit which contains silicoaluminophosphate particles and has a plurality of cells that extend in a longitudinal direction from a first end surface to a second end surface and are partitioned by a cell wall, comprising:

   (a) a step of preparing a plurality of honeycomb compacts,
   (b) a step of forming a honeycomb unit including at least one joining surface on which paste for adhesion layers is to be applied in a subsequent step by firing the respective honeycomb compacts,
   (c) a step of impregnating all of the respective honeycomb units in water,
   (d) a step of preparing paste for adhesion layers containing at least inorganic particles, a binder and water,
   (e) a step of applying the paste for adhesion layers to the joining surfaces of the honeycomb units and mutually joining the respective honeycomb units, and
   (f) a step of drying, defatting and solidifying the paste for adhesion layers, thereby obtaining an adhesion layer,

   wherein, in the step (c) of impregnating all of the respective honeycomb units in water, an amount of water in which the honeycomb units are impregnated is in a range of 15 wt% to 25 wt% with respect to a weight of the honeycomb units in a dried state.

2. The method for manufacturing a honeycomb structure according to Claim 1,
   wherein the silicoaluminophosphate particles have a molar ratio Si/(Al+P) in a range of 0.11 to 0.33.

3. The method for manufacturing a honeycomb structure according to Claim 1 or 2,
   wherein the silicoaluminophosphate particles are contained in the honeycomb units in a dried state in a range of 230 g/L to 360 g/L with respect to all the honeycomb units.

4. The method for manufacturing a honeycomb structure according to any one of Claims 1 to 3,
   wherein the step (c) of impregnating all of the respective honeycomb units in water includes a step of impregnating each of the honeycomb units in water.

5. The method for manufacturing a honeycomb structure according to any one of Claims 1 to 4,
   wherein the honeycomb unit further contains an inorganic binder.

6. The method for manufacturing a honeycomb structure according to any one of Claims 1 to 5,
   wherein the honeycomb unit further contains an inorganic fiber.

7. The method for manufacturing a honeycomb structure according to Claim 6,
   wherein the inorganic fiber is one or more selected from a group consisting of alumina, silica, silicon carbide, silica alumina, glass, potassium titanate and aluminum borate.

8. A method for manufacturing an exhaust gas purifying apparatus comprising:

   a step of manufacturing a honeycomb structure using the method according to any one of Claims 1 to 7, and a step of accommodating the honeycomb structure in a metal container in a state in which a holding seal material is disposed around the honeycomb structure.

# FIG. 1

# FIG. 2

# FIG. 3

```
                    ( START )
                        │
                        ▼
```

| (a) A PLURALITY OF HONEYCOMB COMPACTS ARE PREPARED | S110 |

| (b) HONEYCOMB UNIT INCLUDING AT LEAST ONE JOINING SURFACE ON WHICH PASTE FOR ADHESION LAYERS IS TO BE APPLIED IN SUBSEQUENT STEP IS FORMED BY FIRING RESPECTIVE HONEYCOMB COMPACTS | S120 |

| (c) ALL OF RESPECTIVE HONEYCOMB UNITS ARE IMPREGNATED IN WATER<br><br>AMOUNT OF WATER IN WHICH HONEYCOMB UNITS ARE IMPREGNATED IS IN RANGE OF 15 wt% TO 25 wt% WITH RESPECT TO WEIGHT OF HONEYCOMB UNITS IN DRIED STATE | S130 |

| (d) PASTE FOR ADHESION LAYERS CONTAINING AT LEAST INORGANIC PARTICLES, BINDER AND WATER IS PREPARED | S140 |

| (e) PASTE FOR ADHESION LAYERS IS APPLIED TO JOINING SURFACES OF HONEYCOMB UNITS, AND RESPECTIVE HONEYCOMB UNITS ARE MUTUALLY JOINED | S150 |

| (f) PASTE FOR ADHESION LAYERS IS DRIED, DEFATTED AND SOLIDIFIED, THEREBY OBTAINING ADHESION LAYER | S160 |

```
                        │
                        ▼
                    ( END )
```

## INTERNATIONAL SEARCH REPORT

| International application No. |
| --- |
| PCT/JP2011/071272 |

**A. CLASSIFICATION OF SUBJECT MATTER**
*C04B37/00*(2006.01)i, *B01D53/94*(2006.01)i, *B01J35/04*(2006.01)i, *C04B38/00*(2006.01)i

According to International Patent Classification (IPC) or to both national classification and IPC

**B. FIELDS SEARCHED**

Minimum documentation searched (classification system followed by classification symbols)
C04B37/00, B01D53/94

Documentation searched other than minimum documentation to the extent that such documents are included in the fields searched
Jitsuyo Shinan Koho          1922–1996    Jitsuyo Shinan Toroku Koho    1996–2011
Kokai Jitsuyo Shinan Koho    1971–2011    Toroku Jitsuyo Shinan Koho    1994–2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2009-190964 A  (Ibiden Co., Ltd.), 27 August 2009 (27.08.2009), claims 3, 9, 10, 11; paragraphs [0023], [0052], [0061] to [0066]; fig. 2 (Family: none) | 1-8 |
| Y | JP 2010-221575 A  (NGK Insulators, Ltd.), 07 October 2010 (07.10.2010), claim 1; paragraph [0059] (Family: none) | 1-8 |
| Y | JP 2007-522919 A  (Corning Inc.), 16 August 2007 (16.08.2007), claims 1, 10 & US 2005/0159308 A1    & EP 1699554 A & CN 1901989 A | 1-8 |

| ☒ | Further documents are listed in the continuation of Box C. | ☐ | See patent family annex. |
| --- | --- | --- | --- |

```
*     Special categories of cited documents:
"A"   document defining the general state of the art which is not considered
      to be of particular relevance
"E"   earlier application or patent but published on or after the international
      filing date
"L"   document which may throw doubts on priority claim(s) or which is
      cited to establish the publication date of another citation or other
      special reason (as specified)
"O"   document referring to an oral disclosure, use, exhibition or other means
"P"   document published prior to the international filing date but later than
      the priority date claimed
```

```
"T"   later document published after the international filing date or priority
      date and not in conflict with the application but cited to understand
      the principle or theory underlying the invention
"X"   document of particular relevance; the claimed invention cannot be
      considered novel or cannot be considered to involve an inventive
      step when the document is taken alone
"Y"   document of particular relevance; the claimed invention cannot be
      considered to involve an inventive step when the document is
      combined with one or more other such documents, such combination
      being obvious to a person skilled in the art
"&"   document member of the same patent family
```

| Date of the actual completion of the international search  06 December, 2011 (06.12.11) | Date of mailing of the international search report  20 December, 2011 (20.12.11) |
| --- | --- |
| Name and mailing address of the ISA/  Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/071272

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2011-125852 A  (Ibiden Co., Ltd.),<br>30 June 2011 (30.06.2011),<br>claims 1, 2<br>(Family: none) | 1-8 |
| Y | JP 2010-215414 A  (Ibiden Co., Ltd.),<br>30 September 2010 (30.09.2010),<br>claim 1; paragraph [0060]<br>(Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 09141897 A

- WO 06137149 A